# EUROPEAN PATENT APPLICATION

(11) **EP 3 477 974 A1**
(43) Date of publication of application: **01.05.2019**
(21) Application number: 17814629.6
(22) Date of filing: 12.06.2017
(51) Int. Cl.: H04W 4/24, H04M 15/00

(54) **ACCESS CONTROL METHOD AND APPARATUS IN SERVICE RESTRICTION**

(30) Priority: 23.06.2016 CN 201610464461
(71) Applicant: ZTE Corporation, Shenzhen, Guangdong 518057 (CN)
(72) Inventor: LIN, Kai, Shenzhen Guangdong 518057 (CN)
(74) Representative: Petit, Maxime
(86) International application number: PCT/CN2017/087923
(87) International publication number: WO 2017/219891

(57) **Abstract**

Embodiments of the present disclosure provide a service restricted access control method and device, by extending fields of source and destination address in a format of internet protocol (IP) address filter rule of RFC 3588 protocol (i.e., diameter base protocol) and newly adding an optional uniform resource locator (URL) parameter, an online charging system (OCS) can perform filtering for packets by setting URL rather than IP address, which is convenient for setting and utilizing a command.

## Description

### TECHNICAL FIELD

The present disclosure relates to the field of network communication technology, and in particular to a method for restricting user's behavior of using a network by providing filter information in an online charging system (OCS) of evolved packet core (EPC) system defined by 3^{rd} generation partnership project (3GPP).

### BACKGROUND

MS/UE (e.g., mobile terminal) initiates a data service after a successful authentication on an OCS to trigger a credit control request for applying for a quota. The OCS sends a credit control response message, as a response, to a gateway (GW) according to user's usage, to indicate that user's services are introduced restrictedly. A field of final unit indication (FUI) in the credit control response message carries an address of a service, which is permitted or prohibited, by the OCS, to be used by a user, in a format of internet protocol (IP) filter rule. The GW allows the user to access the service permitted, by the OCS, to be continuously used, and prohibits the user to access other services.

The format of IP filter rule is a data format defined by RFC 3588 protocol (i.e., Diameter Base Protocol), and specifically is "action dir proto from src to dst [options]" (i.e., "action direction protocol from source to destination [options]").

In a case where the OCS requires for restricting user's behavior using a network, if an IP address of a user's mobile terminal is any address, the user is permitted to continue to access a charging website having an IP address of 2.2.2.2, to perform charging. Operation commands of "permit in IP address from any to 2.2.2.2" and "permit out IP address from 2.2.2.2 to any" are provided in accordance with a command format.

It is clear that, for restricting user's behavior, an IP address of a target website should be known for setting a command, and if the target website has a plurality of IP addresses, a plurality of commands should be executed. However, the IP address is generally invisible for a user, and only an uniform resource locator (URL) is known, thus a method for setting a command by using an IP address is not convenient and flexible enough.

### SUMMARY

Embodiments of the present disclosure provide a service restricted access control method and device for solving problems that, in a case where an OCS requires for restricting user's behavior using a network, an IP address of a target website should be known for setting a command, and if the target website has a plurality of IP addresses, a plurality of command should be executed, which are not convenient and flexible enough.

In order to solve any of the problems above, an embodiment of the present disclosure provides a service restricted access control method, including: receiving a credit control request message transmitted from a gateway; inquiring a current service quota for a user; generating a credit control response message when the current service quota is insufficient, and the credit control response message including preset uniform resource locator parameter information for an access restricted resource; and transmitting the credit control response message to the gateway.

An embodiment of the present disclosure also provides a service restricted access control method, including: transmitting a credit control request message; receiving a credit control response message, and the credit control response message including preset uniform resource locator parameter information for an access restricted resource; writing the uniform resource locator parameter information in the credit control response message into a filter information table; performing a filtering judgment according to the filter information table and uniform resource locator parameter information of a current service packet; and performing an access restricted control for the current service packet in accordance with a result of the filtering judgment.

An embodiment of the present disclosure provides a service restricted access control method, including: transmitting a credit control request message; receiving a credit control response message, and the credit control response message including preset uniform resource locator parameter information for an access restricted resource; acquiring an internet protocol address information related to the uniform resource locator parameter information in the credit control response message; writing the internet protocol address information into a filter information table; performing a filtering judgment according to the filter information table and an internet protocol address information of a current service packet; and performing an access restricted control for the current service packet in accordance with a result of the filtering judgment.

An embodiment of the present disclosure provides a service restricted access control device, including: a first receiving module configured to receive a credit control request message transmitted from a gateway; an inquiring module configured to inquire a current service quota for a user; a first generation module configured to generate a credit control response message when the current service quota is insufficient, and the credit control response message including preset uniform resource locator parameter information for an access restricted resource; and a first transmitting module configured to transmit the credit control response message to the gateway.

An embodiment of the present disclosure provides a service restricted access control device, including: a second generation module configured to generate a credit control request message; a second transmitting module configured to transmit the credit control request message; a second receiving module configured to receive a credit control response message, and the credit control response message including preset uniform resource locator parameter information for an access restricted resource; a first processing module configured to write the uniform resource locator parameter information in the credit control response message into a filter information table; a first judging module configured to perform a filtering judgment according to the filter information table and uniform resource locator parameter information of a current service packet; and a first control module configured to perform an access restricted control for the current service packet in accordance with a result of the filtering judgment.

An embodiment of the present disclosure provides a service restricted access control device, including: a third generation module configured to generate a credit control request message; a third transmitting module configured to transmit the credit control request message; a third receiving module configured to receive a credit control response message, and the credit control response message including preset uniform resource locator parameter information for an access restricted resource; a second acquiring module configured to acquire an internet protocol address information related to the uniform resource locator parameter information in the credit control response message; a second processing module configured to write the internet protocol address information into a filter information table; a second judging module configured to perform a filtering judgment according to the filter information table and an internet protocol address information of a current service packet; and a second control module configured to perform an access restricted control for the current service packet in accordance with a result of the filtering judgment.

Following beneficial effects are achieved by the present disclosure.

In accordance with the service restricted access control method and device provided by embodiments of the present disclosure, the OCS can make a GW filter user's packets by setting a credit control response message including an URL parameter rather than an IP address.

### BRIEF DESCRIPTION OF DRAWINGS

Fig. 1 shows a flowchart for an online charging system indicating that a user is only permitted to access an URL and an IP address of a charging website in accordance with an embodiment of the present disclosure;
Fig. 2 shows a flowchart for an online charging system restricting a user from accessing websites related to Sina Net in accordance with an embodiment of the present disclosure;
Fig. 3 shows a flowchart for an online charging system indicating that a user is only permitted to access a specific IP address in accordance with an embodiment of the present disclosure;
Fig. 4 shows a diagram of an online charging system device for performing a service restricted access control in accordance with an embodiment of the present disclosure;
Fig. 5 shows a diagram of a gateway device for performing a service restricted access control in accordance with an embodiment of the present disclosure; and
Fig. 6 shows a diagram of a gateway device for performing a service restricted access control in accordance with an embodiment of the present disclosure.

### DETAILED DESCRIPTION

Embodiments of the present disclosure are illustrated in detail by specific implementations in conjunction with accompanying drawings.

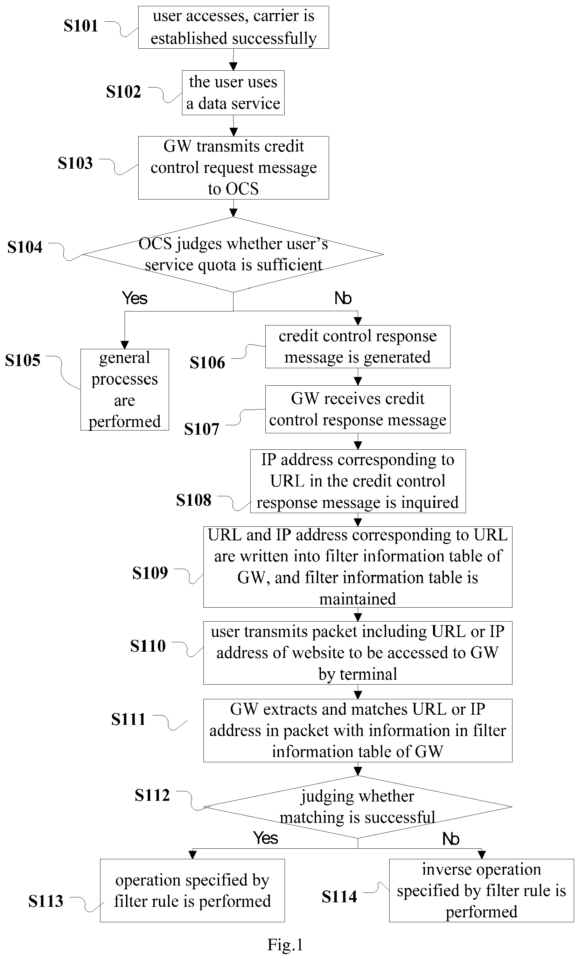

In an embodiment, when a user is in arrears, an OCS indicates that the user is only permitted to access an URL and an IP address of a charging website, and Fig. 1 shows a specific procedure for the user accessing the URL.

At S101, a user accesses, and a carrier is established successfully.

In a case where the user utilizes a data service or a network connection, a communication would be established between the user and a GW, that is, a carrier is established.

At S102, the user uses a data service.

At S103, a GW transmits a credit control request message to an OCS.

The user's behavior of using the data service triggers the GW to transmit the credit control request message to the OCS, so as to request a current service quota for the user. The OCS may further transmit information to the GW periodically, and the GW responds with the credit control request message, for monitoring user's service quota.

At S104, the OCS judges whether the user's service quota is sufficient, and if the user's service quota is sufficient, proceeding to S105, and if the user's service quota is insufficient, proceeding to S106.

At S105, general processes are performed.

If it is judged that the user's service quota is sufficient, the OCS responds to the credit control request message from the GW, and issues the user's service quota. The user's behavior of using a network is normally performed and is not restricted.

At S106, a credit control response message is generated.

When the OCS finds that the user's service quota is insufficient, that is, the user is in arrears, the OCS generates a message responding to the credit control request message, i.e., the credit control response message, as a response, and transmits the credit control response message to the GW to indicate that the user's service would be restricted. The credit control response message includes a field of Restriction-Filter-Rule in a format of IP filter rule, extended fields of "src" and "dst", and a newly added URL parameter, that is, "src and dst <address/mask|URL>[ports] (source and destination <address/mask|URL>[ports])".

The "src" and "dst" are a source address and a destination address for configuring a filter command, and an URL that the OCS permits or restricts the user to continue to access is carried. In addition, wildcard characters "*" and "?" for the URL are supported.

The OCS transmits following instructions to the GW: "permit in ip from any to www.recharge.com"; and "permit out ip from www.recharge.com to any".

The "www.recharge.com" refers to an URL of a charging website, and specifically may be for example "www.taobao.com" or an URL of any of official websites of operators. The instructions mean that all upstream and downstream packets on www.recharge.com are permitted.

At S107, the GW receives the credit control response message.

At S108, an IP address corresponding to the URL in the credit control response message is inquired.

The GW parses the URL in the credit control response message, and looks up the IP address corresponding to the URL.

At S109, the URL and the IP address corresponding to the URL are written into a filter information table of the GW, and the filter information table is maintained.

The URL may correspond to a plurality of IP addresses. In a case where the URL and the IP address(es) corresponding to the URL are simultaneously written into the filter information table of the GW, the GW can perform filtering by utilizing both of the URL and the IP address, the number of commands to be set is decreased, and an omission is prevented from occurring, resulting in an improved reliability. The GW needs to maintain the filter information table, and if information such as the IP address of the website is changed during the procedure of the user utilizing the service, the filter information table needs to be updated dynamically.

At S110, the user transmits a packet including an URL or IP address of a website to be accessed to the GW by a terminal.

The user may access the address of "www.recharge.com" by a mobile terminal to perform a charging operation. Since the GW can perform filtering by utilizing both of the URL and the IP address, if the user transmits a packet including an IP address of a website, filtering is also performed.

At Sill, the GW extracts and matches the URL or IP address in the packet with information in the filter information table of the GW.

At S112, it is judged whether matching is successful, if the matching is successful, proceeding to S113, and if the matching is unsuccessful, proceeding to S114.

At S113, an operation specified by a filter rule is performed.

All upstream and downstream packets on www.recharge.com are permitted. Packets for accessing the charging website are not restricted by the GW, and the user can exchange packets with the charging website to perform charging.

At S114, an inverse operation specified by the filter rule is performed.

If the user accesses the address of "www.sina.com" and performs browsing, the GW extracts and matches "www.sina.com" with the filter information table of the GW, and the matching would be unsuccessful, that is, there is no "www.sina.com" in the list of websites permitting the user to access. If the packet is not matched with the filter rule, the inverse operation specified by the filter rule is performed, all packets for accessing the address of "www.sina.com" are discarded, and the user cannot browse web pages.

In the service restricted access control method of the embodiment of the present disclosure, by extending fields of "src" and "dst" in the format of IP filter rule of RFC 3588 protocol and newly adding an optional URL parameter, the OCS directly sets the URL, and performs packet filtering by utilizing both of the URL and an IP address to restrict user's behavior of using a network. The URL may correspond to a plurality of IP addresses, and with the service restricted control access method and device of the embodiments of the present disclosure, the number of commands to be set is decreased, and an omission is prevented from occurring, resulting in an improved reliability. Meanwhile, if the IP address of a website would be changed subsequently, the URL of the website would not be changed in general, thus there is no need to modify the commands, resulting in an improved maintainability. Furthermore, the extended fields of "src" and "dst" in the format of IP filter rule of RFC 3588 protocol, and the newly added optional URL parameter may also be used in any other system, net element or credit control server utilizing RFC 3588 protocol.

Obviously, an ordinary skilled person in the art should understand that, in the embodiment of the present disclosure, the GW writes the URL and the IP address(es) corresponding to the URL into the filter information table, so as to perform packet filtering by utilizing both of the URL and the IP address, however, only the URL may be written into the filter information table so as to perform packet filtering by utilizing only the URL. Moreover, in the embodiment of the present disclosure, the instructions mean that all upstream and downstream packets on "www.recharge.com" are permitted, but in a case where the solution of the embodiment of the present disclosure is applied into any other scene, the contents of the instructions or the filter rule may be changed correspondingly, which is also considered to fall within the scope of protection of the present disclosure.

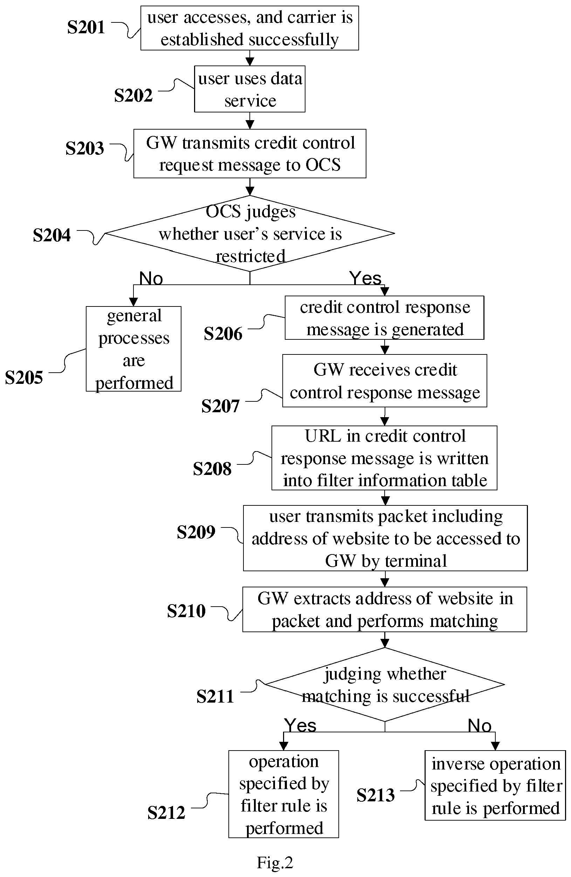

An embodiment of the present disclosure provides a specific procedure for the OCS restricting the user from accessing websites related to Sina Net, which is shown in Fig. 2. It should be understood that, although Sina Net is used as an example in the embodiment, the present disclosure is not limited thereto, the principle of the present disclosure may be applied to any other website, and the example provided here is intended only to help understanding.

At S201, a user accesses, and a carrier is established successfully.

At S202, the user uses a data service.

At S203, a GW transmits a credit control request message to an OCS.

The user's behavior of using the data service triggers the GW to transmit the credit control request message to the OCS, so as to request a current service quota for the user.

At S204, the OCS judges whether the user's service is restricted, if the user's service is restricted, proceeding to S206, and if the user's service is not restricted, proceeding to S205.

The OCS judges whether user's service quota is sufficient, if the user's service quota is sufficient, the user's service is not restricted, and if the user's service quota is insufficient, the user's service is restricted.

At S205, general processes are performed.

If the OCS judges that the user's service quota is sufficient, the OCS responds to the credit control request information of the GW, and issues the user's service quota. The user's behavior of using a network is not restricted.

At S206, a credit control response message is generated.

The OCS generates a message responding to the credit control request message, i.e., the credit control response message, as a response when the OCS finds that the use cannot access websites related to Sina Net, and transmits the credit control response message to the GW to indicate that the user cannot access the websites related to Sina Net. Since extended URL parameter supports wildcard characters "*" and "?" of URL, where "*" indicates one or more characters, "?" indicates one character, such as if the URL is "*.sina.com", when an address including an URL with a postfix of ".sina.com" is accessed, matching is successful.

The OCS transmits a following instruction to the GW: "deny in ip from any to www.sina.com*".

The "www.sina.com*" refers to any packet with "www.sina.com", the instruction means that any upstream packet from any to Sina website is rejected, and a command may be issued without knowing the specific IP address of Sina website.

At S207, the GW receives the credit control response message.

At S208, an URL in the credit control response message is written into a filter information table.

At S209, the user transmits a packet including an address of a website to be accessed to the GW by a terminal.

The user accesses www.sina.com by a mobile terminal.

At S210, the GW extracts the address of the website in the packet and performs a matching.

The GW extracts the URL in the packet, and matches the URL in the packet with information in the filter information table of the GW.

At S211, it is judged whether the matching is successful, if the matching is successful, proceeding to S212, and if the matching is unsuccessful, proceeding to S213.

At S212, an operation specified by a filter rule is performed.

The instruction instructs to reject all upstream packets from any to Sina website. User's packets for accessing Sina website are blocked, and the user cannot access Sina website.

At S213, an inverse operation specified by the filter rule is performed.

If the user accesses any other website, for example, www.baidu.com, to browse web pages, the GW extracts and matches "www.baidu.com" with the filter information table of the GW, the matching would be unsuccessful, that is, there is no "www.baidu.com" in the list of websites prohibiting the user from accessing. Since the packet is not matched with the filter rule, the inverse operation specified by the filter rule is performed, packets for accessing www.baidu.com would be permitted, and the user can normally browse the website.

In the service restricted access control method of the embodiment of the present disclosure, wildcard characters of URL are supported by extending an optional URL parameter, the OCS can directly set the URL to restrict the user from accessing a particular website, and a command may be issued without knowing a specific IP address of the website, resulting in a simplified command.

Obviously, an ordinary skilled person in the art should understand that, in the embodiment of the present disclosure, the GW writes only the URL into the filter information table, so as to perform packet filtering by utilizing the URL, however, an IP address corresponding to the URL may also be written into the filter information table so as to perform packet filtering by utilizing both of the URL and the IP address. Moreover, in the embodiment of the present disclosure, the instruction mean that all upstream packets on www.sina.com are rejected, but in a case where the solution of the embodiment of the present disclosure is applied into any other scene, the content of the instruction may be changed correspondingly, which is also considered to fall within the scope of protection of the present disclosure.

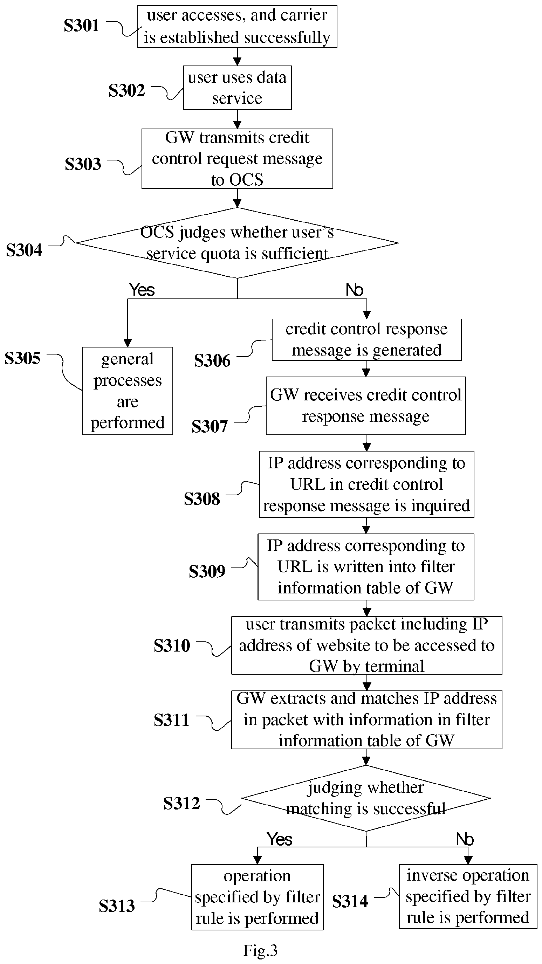

An embodiment of the present disclosure provides a specific procedure for a user accessing a website by using an IP address when the user is in arrears, an OCS indicates that the user only can access a website with an IP address of 140.205.164.47. The procedure is shown in Fig. 3.

At S301, a user accesses, and a carrier is established successfully.

In a case where the user utilizes a data service or a network connection, a communication would be established between the user and a GW, that is, a carrier is established.

At S302, the user uses a data service.

At S303, a GW transmits a credit control request message to an OCS.

The user's behavior of using the data service triggers the GW to transmit the credit control request message to the OCS, so as to request a current service quota for the user.

At S304, the OCS judges whether the user's service quota is sufficient, and if the user's service quota is sufficient, proceeding to S305, and if the user's service quota is insufficient, proceeding to S306.

At S305, general processes are performed.

If it is judged that the user's service quota is sufficient, the OCS responds to the credit control request message from the GW, and issues the user's service quota. The user's behavior of using a network is normally performed and is not restricted.

At S306, a credit control response message is generated.

When the OCS finds that the user's service quota is insufficient, that is, the user is in arrears, the OCS generates a message responding to the credit control request message, i.e., the credit control response message, as a response, and transmits the credit control response message to the GW to indicate that the user's service would be restricted. The credit control response message includes preset URL parameter information of a website with an IP address of 140.205.164.47.

At S307, the GW receives the credit control response message.

At S308, an IP address corresponding to the URL in the credit control response message is inquired.

The IP address corresponding to the URL is 140.205.164.47.

At S309, the IP address corresponding to the URL is written into a filter information table of the GW.

The GW writes the IP address corresponding to the URL into the filter information table.

At S310, the user transmits a packet including an IP address of a website to be accessed to the GW by a terminal.

At S311, the GW extracts and matches the IP address in the packet with information in the filter information table of the GW.

At S312, it is judged whether matching is successful, if the matching is successful, proceeding to S313, and if the matching is unsuccessful, proceeding to S314.

At S313, an operation specified by a filter rule is performed.

All upstream and downstream packets on the IP address of 140.205.164.47 are permitted. Packets for accessing the IP address are not restricted by the GW, and the user can normally access the IP address.

At S314, an inverse operation specified by the filter rule is performed.

If the user accesses an IP address of "3.3.3.3" and performs browsing, the GW extracts and matches "3.3.3.3" with the filter information table of the GW, the matching would be unsuccessful, that is, there is no "3.3.3.3" in the list of websites permitting the user to access. If the packet is not matched with the filter rule, the inverse operation specified by the filter rule is performed, all packets for accessing the IP address of "3.3.3.3" are discarded, and the user cannot browse web pages.

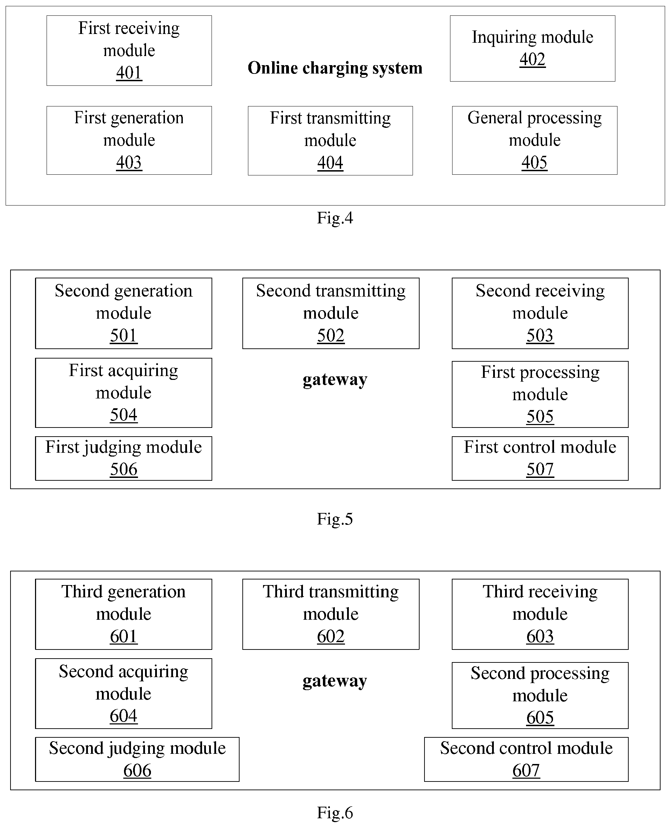

Fig. 4 shows a diagram of an online charging system (OCS) device for performing a service restricted access control. The online charging system device includes following modules, and the modules and functions thereof are illustrated below.

A first receiving module 401 is configured to receive a credit control request message transmitted from a GW.

The OCS may further transmit information to the GW periodically, the GW responds with the credit control request message, for monitoring user's service quota.

An inquiring module 402 is configured to inquire a current service quota for a user.

After receiving the credit control request message transmitted from the GW, the OCS inquires the user's service quota, and judges whether the user's service quota is insufficient, or the user is in arrears, and if the user's service quota is sufficient, it does not need to transmit a credit control response message, and the user's service quota is issued.

A first generation module 403 is configured to generate a credit control response message when the user's service quota is insufficient, and the credit control response message includes preset URL parameter information of an access restricted resource.

For generating the credit control response message including the preset URL parameter information of the access restricted resource, a range of parameters for fields of "src" and "dst" in a format of IP filter rule of the credit control response message needs to be extended, thus the preset URL parameter information of the access restricted resource is written into the extended range of parameters for the fields of "src" and "dst". The URL parameter information may include a wildcard.

A first transmitting module 404 is configured to transmit the credit control response message to the GW.

The credit control response message is generated and transmitted to the GW, and the GW writes the URL parameter information in the credit control response message into a filter information table.

A general processing module 405 is configured to issue the user's service quota.

The general processing module issues the user's service quota for response to the credit control request message of the GW when the OCS judges that the user's service quota is sufficient, and user's behavior of using a network is normally performed and is not restricted.

Obviously, an ordinary skilled person in the art should understand that, in a case where the solution of the embodiment of the present disclosure is applied into any other scene, the modules of the OCS in the embodiment of the present disclosure may be increased or decreased correspondingly, which is also considered to fall within the scope of protection of the present disclosure.

Fig. 5 shows a diagram of a gateway for performing a service restricted access control. The gateway includes following modules, and the modules and functions thereof are illustrated below.

A second generation module 501 is configured to generate a credit control request message.

User's behavior of using data service triggers the GW to transmit the credit control request message to the OCS, so as to request the OCS to inquire whether a current service quota for a user is sufficient.

A second transmitting module 502 is configured to transmit the credit control request message.

The GW transmits the credit control request message to the OCS.

A second receiving module 503 is configured to receive a credit control response message including preset URL parameter information for an access restricted resource.

A first acquiring module 504 is configured to acquire IP address information related to the URL parameter information in the credit control response message.

The GW can acquire related IP address information according to the URL parameter information in the credit control response message.

A first processing module 505 is configured to write the URL parameter information in the credit control response message into a filter information table, or write the URL and the related IP address information into the filter information table, and maintain the filter information table.

The GW extracts the URL parameter information from the credit control response message, and writes the extracted URL parameter information into the filter information table. In a case where both of the URL and the corresponding IP address are needed for filtering judgment, both of the URL and the related IP address information needs to be written into the filter information table. Meanwhile, the filter information table needs to be maintained. If the user finds that information of the website such as IP address is changed during a procedure of the user utilizing the service, the filter information table needs to be updated.

A first judging module 506 is configured to perform a filtering judgment according to the filter information table and URL parameter information of a current service packet.

The GW receives user's current service packet, extracts the URL parameter information in the user's current service packet and compares the extracted URL parameter information with the filter information table. If the filter information table includes IP addresses corresponding to URLs, the GW also can extract the IP address corresponding to the URL parameter information in the user's current service packet and compare the extracted IP address with the filter information table.

A first control module 507 is configured to perform an access restricted control on the user's current service packet according to a result of the filtering judgment.

No matter whether the URL or the IP address in the user's current service packet matches with the filter information table, an access restricted control is performed in accordance with an instruction content of the credit control response message, and an operation specified by a filter rule or an inverse operation specified by the filter rule is performed.

Obviously, an ordinary skilled person in the art should understand that, in a case where the solution of the embodiment of the present disclosure is applied into any other scene, the modules of the GW in the embodiment of the present disclosure may be increased or decreased correspondingly, which is also considered to fall within the scope of protection of the present disclosure.

Fig. 6 shows a diagram of a gateway for performing a service restricted access control. The gateway includes following modules, and the modules and functions thereof are illustrated below.

A third generation module 601 is configured to generate a credit control request message.

A third generation module 602 is configured to transmit the credit control request message.

A third receiving module 603 is configured to receive a credit control response message, and the credit control response message includes preset URL parameter information for an access restricted resource.

A second acquiring module 604 is configured to acquire IP address information related to the URL parameter information in the credit control response message.

A second processing module 605 is configured to write the IP address information into a filter information table and maintain the filter information table.

The GW may only write the IP address corresponding to the URL into the filter information table, and maintain the filter information table. When the user finds that the information of the website such as IP address is changed during a procedure of the user utilizing the service, the filter information table is updated dramatically.

A second judging module 606 is configured to perform a filtering judgment according to the filter information table and an IP address of a current service packet.

The GW receives user's current service packet, extracts the IP address from the user's current service packet and compares the extracted IP address with the filter information table.

A second control module 607 is configured to perform an access restricted control on the current service packet according to a result of the filtering judgement.

No matter whether the IP address in the user's current service packet matches with the filter information table, an access restricted control is performed in accordance with an instruction content of the credit control response message, and an operation specified by a filter rule or an inverse operation specified by the filter rule is performed.

Obviously, an ordinary skilled person in the art should understand that, modules or steps of embodiments of the present application may be implemented by a general computing device, they may be integrated into a single computing device, or distributed over a network including a plurality of computing devices, optionally, they may be implemented by program codes executable by a computing device, thus may be stored in a computer storing medium (ROM, RAM, diskette, compact disc) and executed by the computing device. In some cases, the steps may be performed in an order different from that has been illustrated or described, the modules may be manufactured as integrated circuit modules respectively, or some of the modules or the steps may be manufactured as a single integrated circuit module. The present disclosure is not limited to any particular combination of hardware and software.

Embodiments of the present disclosure are illustrated in detail by above descriptions in conjunction with specific implementations, but the present disclosure is not limited thereto. A person of ordinary skill in the art can make various simple deductions or substitutions without departing from the concept of the present disclosure, any of these deductions or substitutions should fall into the protection scope of the present disclosure.

## Claims

1. A service restricted access control method, comprising:
receiving a credit control request message transmitted from a gateway;
inquiring a current service quota for a user;
generating a credit control response message when the current service quota is insufficient, and the credit control response message comprising preset uniform resource locator parameter information for an access restricted resource; and
transmitting the credit control response message to the gateway.

2. The method of claim 1, wherein the preset uniform resource locator parameter information for the access restricted resource comprises at least uniform resource locator parameter information with a wildcard.

3. The method of claim 1 or 2, wherein generating the credit control response message comprises:
extending a range of parameters for fields of source and destination addresses in a format of internet protocol address filter rule in the credit control response message, and
writing the preset uniform resource locator parameter information for the access restricted resource into the range of parameters for the fields of source and destination addresses.

4. A service restricted access control method, comprising:
transmitting a credit control request message;
receiving a credit control response message, and the credit control response message comprising preset uniform resource locator parameter information for an access restricted resource;
writing the uniform resource locator parameter information in the credit control response message into a filter information table;
performing a filtering judgment according to the filter information table and uniform resource locator parameter information of a current service packet; and
performing an access restricted control for the current service packet in accordance with a result of the filtering judgment.

5. The method of claim 4, further comprising:
acquiring an internet protocol address information related to the uniform resource locator parameter information in the credit control response message;
writing the internet protocol address information into the filter information table;
performing a filtering judgment according to the filter information table and an internet protocol address information of the current service packet; and
performing the access restricted control for the current service packet in accordance with a result of the filtering judgment.

6. A service restricted access control method, comprising:
transmitting a credit control request message;
receiving a credit control response message, and the credit control response message comprising preset uniform resource locator parameter information for an access restricted resource;
acquiring an internet protocol address information related to the uniform resource locator parameter information in the credit control response message;
writing the internet protocol address information into a filter information table;
performing a filtering judgment according to the filter information table and an internet protocol address information of a current service packet; and
performing an access restricted control for the current service packet in accordance with a result of the filtering judgment.

7. A service restricted access control device, comprising:
a first receiving module configured to receive a credit control request message transmitted from a gateway;
an inquiring module configured to inquire a current service quota for a user;
a first generation module configured to generate a credit control response message when the current service quota is insufficient, and the credit control response message comprising preset uniform resource locator parameter information for an access restricted resource; and
a first transmitting module configured to transmit the credit control response message to the gateway.

8. The device of claim 7, wherein the preset uniform resource locator parameter information for the access restricted resource comprises at least uniform resource locator parameter information with a wildcard.

9. The device of claim 7 or 8, wherein the first generation module is configured to:
extend a range of parameters for fields of source and destination addresses in a format of internet protocol address filter rule in the credit control response message, and
write the preset uniform resource locator parameter information for the access restricted resource into the range of parameters for the fields of source and destination addresses.

10. A service restricted access control device, comprising:
a second generation module configured to generate a credit control request message;
a second transmitting module configured to transmit the credit control request message;
a second receiving module configured to receive a credit control response message, and the credit control response message comprising preset uniform resource locator parameter information for an access restricted resource;
a first processing module configured to write the uniform resource locator parameter information in the credit control response message into a filter information table;
a first judging module configured to perform a filtering judgment according to the filter information table and uniform resource locator parameter information of a current service packet; and
a first control module configured to perform an access restricted control for the current service packet in accordance with a result of the filtering judgment.

11. The device of claim 10, further comprising:
a first acquiring module configured to acquire an internet protocol address information related to the uniform resource locator parameter information in the credit control response message;
the first processing module is further configured to write the internet protocol address information into the filter information table;
the first judging module is further configured to perform a filtering judgment according to the filter information table and an internet protocol address information of the current service packet; and
the first control module is further configured to perform the access restricted control for the current service packet in accordance with a result of the filtering judgment.

12. A service restricted access control device, comprising:
a third generation module configured to generate a credit control request message;
a third transmitting module configured to transmit the credit control request message;
a third receiving module configured to receive a credit control response message, and the credit control response message comprising preset uniform resource locator parameter information for an access restricted resource;
a second acquiring module configured to acquire an internet protocol address information related to the uniform resource locator parameter information in the credit control response message;
a second processing module configured to write the internet protocol address information into a filter information table;
a second judging module configured to perform a filtering judgment according to the filter information table and an internet protocol address information of a current service packet; and
a second control module configured to perform an access restricted control for the current service packet in accordance with a result of the filtering judgment.

13. A computer storing medium, storing executable instructions executed for performing the method of any of claims 1 through 6.
